# EUROPÄISCHE PATENTANMELDUNG

(11) **EP 2 837 870 A1**
(43) Veröffentlichungstag der Anmeldung: **18.02.2015**
(21) Anmeldenummer: 13180448.6
(22) Anmeldetag: 14.08.2013
(51) Int. Cl.: F16M 1/00, F16B 7/18, F16M 1/08

(54) **Gehäuse zur Verwendung bei mechatronischen Antriebssystemen**

(71) Anmelder: Dr. Fritz Faulhaber GmbH & Co. KG, 71101 Schönaich (DE)
(72) Erfinder: Schwenker, Frank, 73230 Kirchheim unter Teck (DE)
(74) Vertreter: Patentanwälte Dr. Solf & Zapf

(57) **Zusammenfassung**

Die vorliegende Erfindung betrifft ein Gehäuse (1) zur Aufnahme von mindestens einem elektromotorischen Antriebsmodul für mechatronische Antriebssysteme, umfassend einen von einer Umfangswandung (2) umschlossenen hohlzylindrischen Innenraum (3). Die Umfangswandung (2) weist eine Rechtseckform mit vier Seitenwänden (4) auf. Der hohlzylindrische Innenraum (3) besitzt einen in Bezug auf seine Längsachse (X-X) insbesondere kreisförmigen Querschnitt. Die Umfangswandung (2) weist in mindestens einer ihrer Eckbereiche (6) eine Ausnehmung (7) zur Aufnahme von Befestigungsmitteln auf. Die Ausnehmung (7) verläuft parallel zur Längsachse (X-X), und umfasst einen durch die Umfangswandung (2) hindurch sich erstreckenden Wanddurchbruch (8). Die Ausnehmung (7) besitzt einen in Bezug auf ihre Längsachse (Y-Y) polygonförmigen Querschnitt. In einer Längsseite (9) der Ausnehmung (7), die parallel zu einer der Seitenwände (4) der Umfangswandung (2) verläuft und an diese angrenzt, ist der sich durch die Umfangswandung (2) hindurch bis zur Gehäuseaußenseite erstreckende Wanddurchbruch (8) ausgebildet.

## Beschreibung

Die vorliegende Erfindung betrifft ein Gehäuse zur Aufnahme von mindestens einem elektromotorischen Antriebsmodul für mechatronische Antriebssysteme, umfassend einen von einer Umfangswandung umgebenen Innenraum, wobei insbesondere die Umfangswandung eine Rechteckform mit vier Seitenwänden aufweist, und der Innenraum einen in Bezug auf seine Längsachse insbesondere kreisförmigen Querschnitt besitzt, wobei die Umfangswandung in mindestens einem ihrer Eckbereiche eine Ausnehmung zur Aufnahme von Befestigungsmitteln aufweist, wobei die Ausnehmung parallel zur Längsachse verläuft und einen durch die Gehäusewandung hindurch sich erstreckenden Wanddurchbruch umfasst.

Ein derartiges gattungsgemäßes Gehäuse ist z. B. aus dem US-Designpatent USD 412714 bekannt. Hierbei sind vier Ausnehmungen in den vier Eckbereichen des Gehäuses vorhanden, die als T-förmige Nuten ausgebildet sind, deren senkrechter T-Schenkel den Durchbruch in der Gehäusewandung bildet. In diese T-förmige Nuten können beispielsweise an das Nutprofil angepasste Nutsteine eingesetzt werden, in denen Gewindebohrungen ausgebildet sind, so dass sie für eine unmittelbare Befestigung von Verschraubungselementen dienen, die für die Befestigung von Anbauten an das Gehäuse oder von Zubehörteilen erforderlich sind. In den beiden Stirnflächen des Gehäuses sind zusätzliche in Längsrichtung verlaufende Gewindebohrungen vorgesehen, in die Schrauben eingeschraubt werden können, um beispielsweise stirnseitig das Gehäuse mit Gehäusedeckel zu verschließen. Die Ausbildung von den T-förmigen Nuten und den Längsbohrungen in den Stirnflächen stellt einen erhöhten Herstellungsaufwand dar und bedingt eine eingeschränkte Montageflexibilität. Auch ist ein erhöhter Platzbedarf in den Ecken des Gehäuses für die T-Nuten und die Gewindebohrungen erforderlich.

Der vorliegenden Erfindung liegt die Aufgabe zu Grunde, ein Gehäuse der eingangs beschriebenen Art derart zu verbessern, dass eine größere Montageflexibilität und ein geringerer Platzbedarf ermöglicht werden.

Erfindungsgemäß wird dies dadurch erreicht, dass die Ausnehmung einen in Bezug auf ihre Längsachse polygonförmigen Querschnitt aufweist, wobei in einer Längsseite der Ausnehmung, die parallel zu einer der Seitenwände der Umfangswandung verläuft und an diese angrenzt, der sich durch die Umfangswandung hindurch bis zur Gehäuseaußenseite erstreckende Wanddurchbruch ausgebildet ist. Vorteilhafterweise besitzt der polygonförmige Querschnitt die Form eines gleichseitigen Sechsecks. Erfindungsgemäß kann es zweckmäßig sein, wenn der Wanddurchbruch als Schlitz ausgebildet ist und sich über die gesamte Länge des Gehäuses erstreckt. Alternativ kann es erfindungsgemäß ebenfalls von Vorteil sein, wenn die Ausnehmung mehrere in Längsrichtung hintereinander angeordnete einzelne Wanddurchbrüche aufweist, die beispielsweise rechteckige oder kreisförmige Konturen haben können. Vorteilhafterweise sind in allen vier Eckbereichen erfindungsgemäße Ausnehmungen vorhanden, wobei insbesondere die Wanddurchbrüche der Ausnehmungen an zwei einander gegenüberliegenden Seitenwänden ausgebildet sind. In die erfindungsgemäßen polygonförmigen Ausnehmungen im Gehäuse können Muttern, Nutsteine und Schraubköpfe mit angepasster polygonaler Kontur platzsparend angeordnet werden. Hierbei ist der erfindungsgemäße, als gleichseitiges Sechseck ausgebildete Polygonquerschnitt vorzugsweise an die Größe und die Form von Norm-Muttern oder Norm-Schraubköpfen angepasst. Da die erfindungsgemäßen Ausnehmungen einseitig offen sind, können auch unterschiedlichste Querverschraubungsmöglichkeiten realisiert werden. Erfindungsgemäß umfassen die im Querschnitt polygonförmigen Ausnehmungen die in sie eingeführten Muttern oder Nutsteine in Umfangsrichtung formschlüssig, da diese mit ihren Befestigungsabschnitten der Querschnittsform der Ausnehmungen angepasst sind. Die erfindungsgemäß vorgesehenen Nutsteine können vorteilhafterweise in ihrem quaderförmigen Körper eine Gewindelängsbohrung und/oder auch eine oder mehrere Gewindequerbohrungen aufweisen. Weiterhin kann es erfindungsgemäß von Vorteil sein, wenn die Gehäusewandung in ihren Bereichen zwischen ihren Eckbereichen eine oder mehrere flache Nuten aufweist, die in Längsrichtung des Gehäuses verlaufen. Dies erhöht die Oberfläche und damit das Wärmeabgabevermögen des erfindungsgemäßen Gehäuses. Indem beispielsweise derartige Nuten ein schwalbenschwanzförmiges Profil aufweisen, können sie auch zur Befestigung von Anbauelementen mittels in diese Nuten eingeschobener Nutsteine verwendet werden.

Das erfindungsgemäße Gehäuse ermöglicht eine sehr hohe Montageflexibilität, da ein in dem Gehäuse aufgenommenes Antriebssystem an andere Elemente leicht montiert werden kann oder auch weitere Komponenten an einem ein elektrisches Antriebssystem aufweisendes Gehäuse befestigt werden können. Um verschiedene Montagesituationen abzudecken, ist dabei jeweils immer nur die gleiche Ausführung des erfindungsgemäßen Gehäuses notwendig. Mittels der in die erfindungsgemäßen Ausnehmungen eingeführten Muttern oder Schrauben können an der Vorder- und Rückseite des erfindungsgemäßen Gehäuses Flansche bzw. Deckel leicht befestigt werden. Hierbei weist der an der Vorder- oder Rückseite des Gehäuses befestigte Flansch Bohrungen im Bereich der Ausnehmungen des Gehäuses auf, durch die der Schraubenschaft der zu verwendenden Befestigungsschraube hindurchgeführt wird. In einem derartigen Fall kann das in dem Gehäuse befindliche Antriebssystem axial in verschiedener Weise an einem Anbauelement befestigt werden. Diese Befestigung ist sehr raumsparend, da die stirnseitigen Flansche nicht größer sein müssen als das Gehäuse selber. Denn die zu verwendende Befestigungsschraube wird z. B. von der Rückseite in die jeweilige Ausnehmung eingeführt, und die Schraube greift in das Gewinde des Anbauelementes an der Vorderseite oder eine Mutter wird von der Rückseite in die Ausnehmung eingeführt und mittels des Schraubenschaftes der Befestigungsschraube von der Vorderseite erfolgt das Anschrauben. Auch ist ein seitliches Anschrauben über die in die erfindungsgemäßen Ausnehmungen eingeführten Nutsteine möglich, welche eine Querbohrung mit Gewinde aufweisen.

Weitere vorteilhafte Ausführungen der Erfindung sind in den Unteransprüchen enthalten und werden an Hand der in den beiliegenden Zeichnungen dargestellten Ausführungsbeispiele näher beschrieben.

Es zeigen:
- Fig. 1: eine perspektivische Ansicht eines erfindungsgemäßen Gehäuses,
- Fig. 2: eine weitere Ausgestaltung in perspektivischer Ansicht eines erfindungsgemäßen Gehäuses,
- Fig. 3: eine alternative Ausführungsform in perspektivischer Ansicht eines erfindungsgemäßen Gehäuses,
- Fig. 4: eine weitere Ausführungsform eines erfindungsgemäßen Gehäuses in perspektivischer Darstellung,
- Fig. 5: eine perspektivische Ansicht eines erfindungsgemäßen Nutsteins,
- Fig. 6: eine Stirnansicht eines erfindungsgemäßen Gehäuses gemäß Fig. 1 mit eingesetzten Muttern bzw. Schrauben,
- Fig. 7: eine Stirnansicht, zum Teil geschnitten, eines erfindungsgemäßen Gehäuses mit einem einseitig befestigten Anbauelement,
- Fig. 8: eine perspektivische Ansicht eines erfindungsgemäßen Gehäuses mit stirnseitig und längsseitig befestigten Anbauelementen,
- Fig. 9a: eine Detailansicht bei IX in Fig. 8 im Längsschnitt und
- Fig. 9b: eine Ansicht gemäß Fig. 9a, jedoch unter Verwendung eines anderen Verschraubungselementes.

In den verschiedenen Figuren sind gleiche Teile stets mit denselben Bezugszeichen versehen.

Was die sich anschließende Figurenbeschreibung betrifft, so wird in Bezug auf die vorliegende Erfindung beansprucht, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal jedes Ausführungsbeispiels auch unabhängig von allen anderen im Zusammenhang damit beschriebenen Teilmerkmalen für sich und auch in Kombination mit beliebigen Merkmalen eines anderen Ausführungsbeispiels eine erfinderische Bedeutung haben.

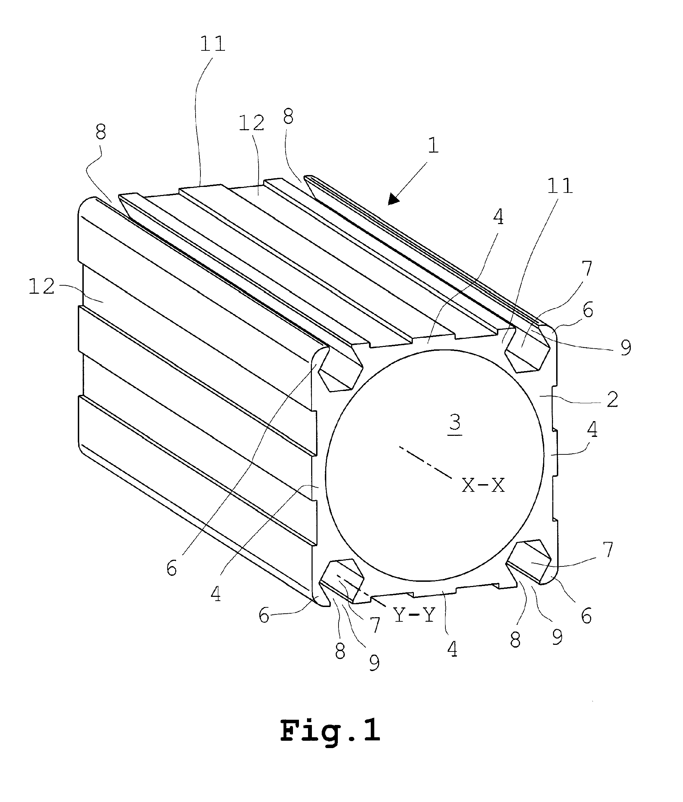

Wie in Fig. 1 dargestellt ist, besteht ein erfindungsgemäßes Gehäuse 1 zur Aufnahme von mindestens einem elektromotorischen Antriebsmodul insbesondere für mechatronische Antriebssysteme aus einer Umfangswandung 2. Diese Umfangswandung 2 umschließt einen hohlzylindrischen Innenraum 3. Der hohlzylindrische Innenraum 3 weist eine mittlere Längsachse X-X auf. Die Umschließung durch die Umfangswandung 2 betrifft einen Umschließungs-Winkelbereich in Bezug auf die Längsachse X-X von größer 180 °.

Im dargestellten Ausführungsbeispiel besitzt die Umfangswandung 2 eine Rechteckform mit vier Seitenwänden 4. Der hohlzylindrische Innenraum 3 besitzt in Bezug auf seine Längsachse X-X einen vorzugsweise kreisförmigen Querschnitt. Die Umfangswandung 2 besitzt in mindestens einer ihrer Eckbereiche 6 eine Ausnehmung 7 zur Aufnahme von Befestigungsmitteln. Diese Ausnehmung 7 verläuft parallel zur Längsachse X-X. Erfindungsgemäß besitzt die Ausnehmung 7 einen in Bezug auf ihre Längsachse Y-Y polygonförmigen Querschnitt. Im dargestellten vorteilhaften Ausführungsbeispiel ist der polygonförmige Querschnitt in Form eines gleichseitigen Sechsecks ausgebildet. Die Ausnehmung 7 besitzt mindestens einen durch die gehäuseaußenseitige Umfangswandung 2 hindurch sich erstreckenden Wanddurchbruch 8. Im dargestellten erfindungsgemäßen vorteilhaften Ausführungsbeispiel verläuft eine Längsseite 9 der Ausnehmung 7 parallel zu einer der Seitenwände 4 der Umfangswandung 2 und grenzt an dieser Seitenwand 4 unmittelbar an. In dieser angrenzenden Längsseite 9 ist der sich durch die Umfangswandung 2 hindurch bis zur Gehäuseaußenseite erstreckende Wanddurchbruch 8 ausgebildet. Im dargestellten Ausführungsbeispiel ist der Wanddurchbruch 8 als Schlitz ausgebildet und erstreckt sich über die gesamte Länge des Gehäuses 1. Weiterhin ist es zweckmäßig, wenn die Ausnehmung 7 derart ausgebildet ist, dass sie an einer oder an beiden Stirnflächen 11 des Gehäuses 1 eine Öffnung aufweist. Im dargestellten vorteilhaften Ausführungsbeispiel sind vier Ausnehmungen 7 in allen vier Eckbereichen 6 ausgebildet. Es liegt jedoch ebenfalls im Rahmen der Erfindung, wenn zwei Ausnehmungen 7 in zwei nebeneinanderliegenden Eckbereichen 6 des Gehäuses 1 vorhanden sind. Hierbei ist es von Vorteil, wenn die Wanddurchbrüche 8 jeweils auf derselben Gehäuseseite, d. h. in derselben Seitenwand 4 des Gehäuses 1 angeordnet sind. In dem Fall, dass in jedem Eckbereich 6, d. h. in allen vier Eckbereichen 6 Ausnehmungen 7 vorhanden sind, ist es zweckmäßig, wenn deren Wanddurchbrüche 8 an zwei einander gegenüberliegenden Seitenwänden 4 des Gehäuses 1 ausgebildet sind.

Das erfindungsgemäße Gehäuse 1 kann als Strangpressprofil oder als Spritzgussteil hergestellt sein.

Wie sich weiterhin aus Fig. 1 ergibt, sind in den Seitenwänden 4 sich über die Gehäuselängserstreckung erstreckende Nuten 12 ausgebildet. Diese Nuten 12 dienen dazu, die Gehäuseoberfläche zu vergrößern, um einen besseren Wärmeaustausch zu ermöglichen. Es liegt jedoch ebenfalls im Rahmen der Erfindung, wenn in denjenigen Seitenwänden 4 des Gehäuses 1, in denen die Wanddurchbrüche 8 nicht vorhanden sind, schwalbenschwanzförmig ausgebildete Nuten vorhanden sind, die z. B. als Hilfsmittel für die Befestigung von Zubehörteilen dienen können.

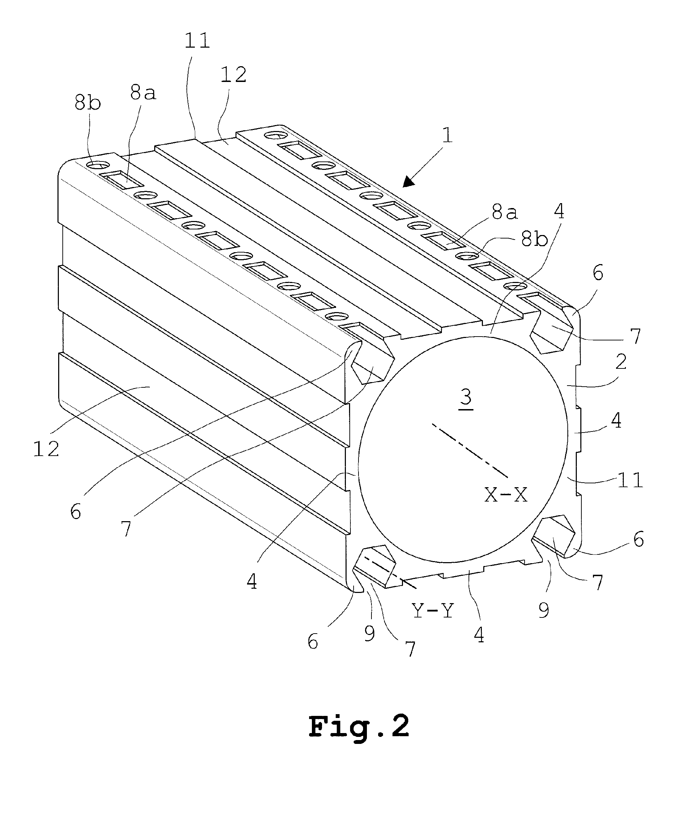

In Fig. 2 ist eine weitere Ausgestaltung eines erfindungsgemäßen Gehäuses 1 dargestellt, wobei dieses Gehäuse 1 im Wesentlichen demjenigen gemäß Fig. 1 entspricht. Allerdings sind hier im Unterschied die Wanddurchbrüche 8 nicht als durchgehender Schlitz ausgebildet, sondern die Wanddurchbrüche sind beispielsweise als voneinander getrennte Durchbrüche 8a und 8b ausgebildet, wobei beispielsweise die Durchbrüche 8a Rechteckform besitzen und die Durchbrüche 8b kreisförmig sind. Ebenfalls kann es zweckmäßig sein, wenn im Bereich der Stirnflächen 11 die Wanddurchbrüche 8b einseitig zur Stirnfläche 11 hin offen sind. Die erfindungsgemäßen, im Querschnitt polygonförmigen Ausnehmungen 7 dienen dazu, um Befestigungsmittel aufzunehmen, wobei diese Befestigungsmittel eine in ihrem Querschnitt dem Querschnitt der Ausnehmungen 7 angepasste Polygonform besitzen. Vorteilhafterweise handelt es sich bei diesen Befestigungsmitteln um Schrauben 13 oder um Muttern 14 oder aber um Nutsteine 15. Diese Befestigungsmittel können in Richtung der Längsachse Y-Y der Ausnehmungen 7 in die Ausnehmung eingebracht werden. Vorteilhafterweise sind die polygonförmigen Ausnehmungen 7 derart bemessen, dass sie an die Form von Norm-Muttern oder Norm-Schrauben angepasst sind. Durch die erfindungsgemäße Ausbildung werden die Befestigungsmittel 13, 14, 15 mit ihren polygonförmigen Abschnitten in Umfangsrichtung formschlüssig gehalten.

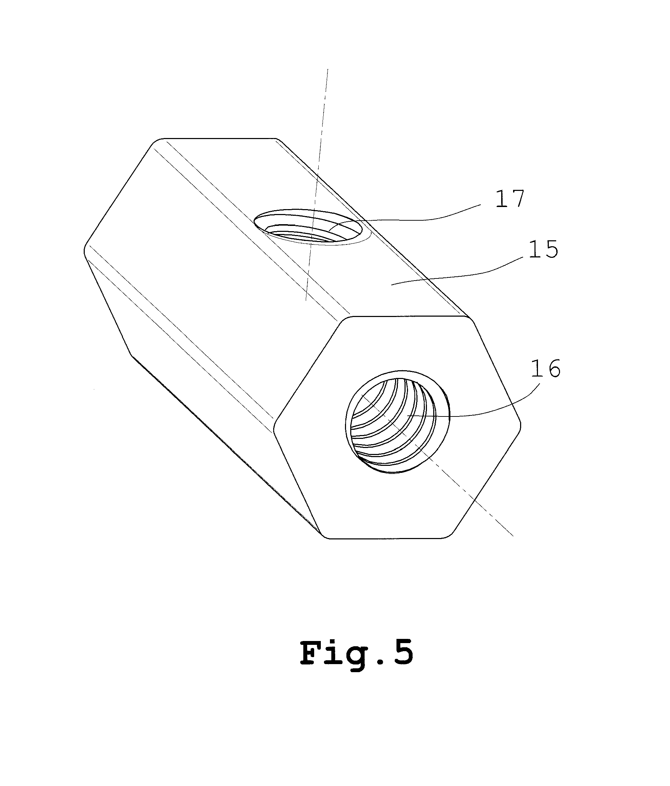

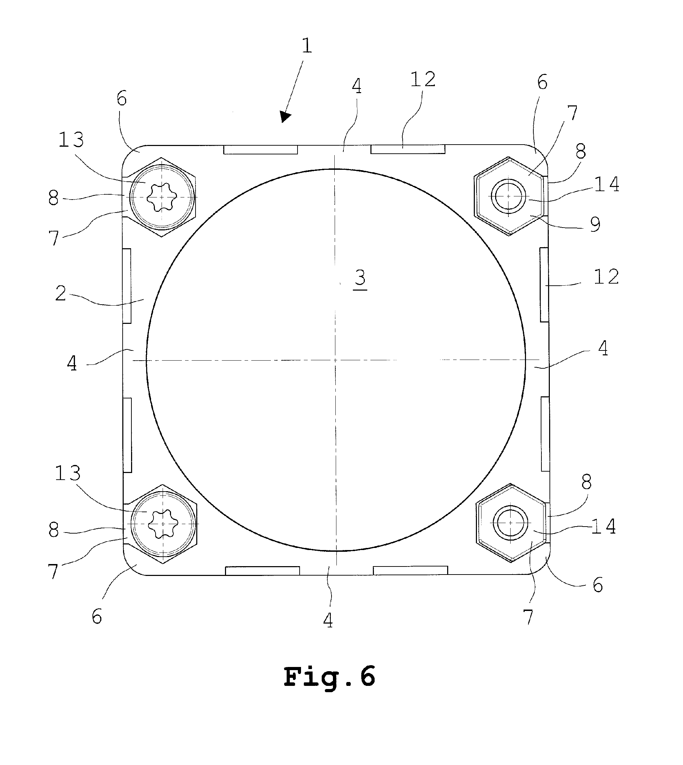

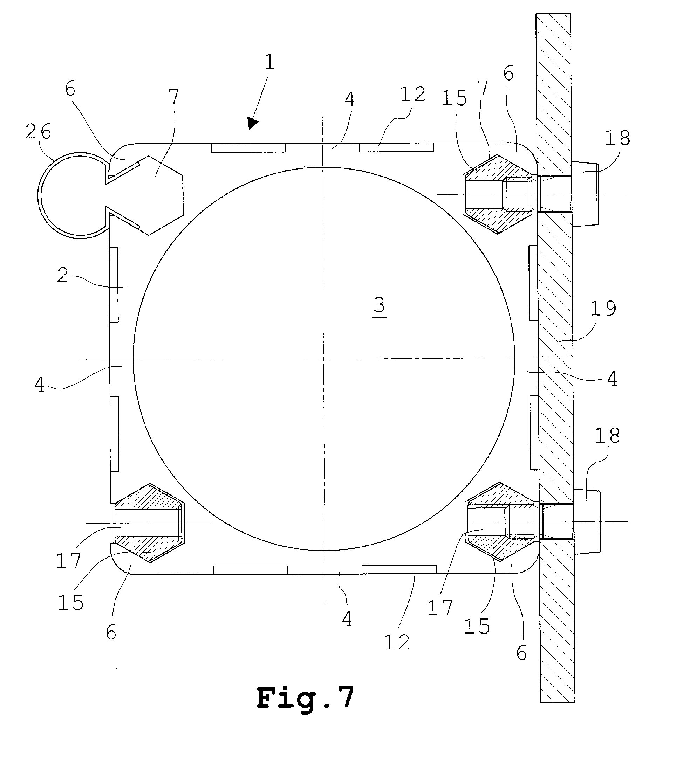

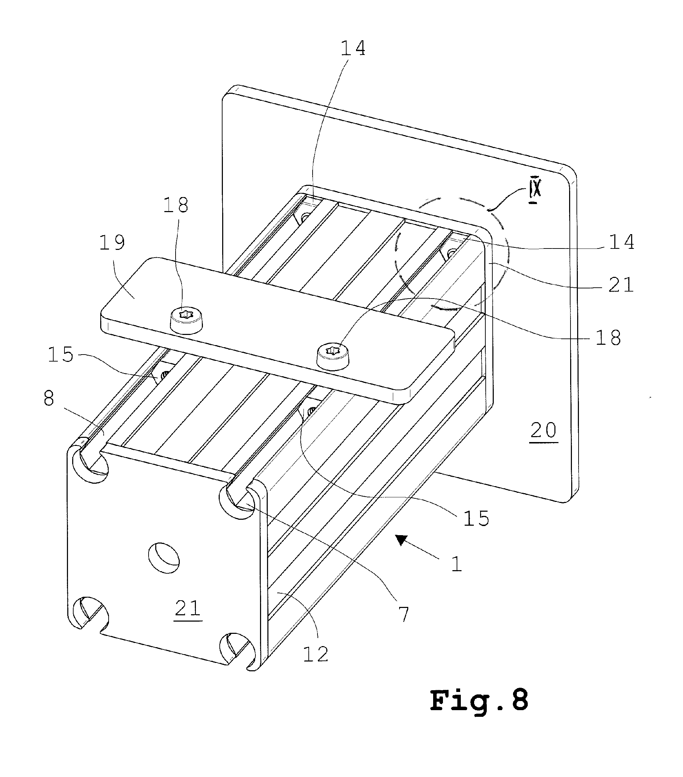

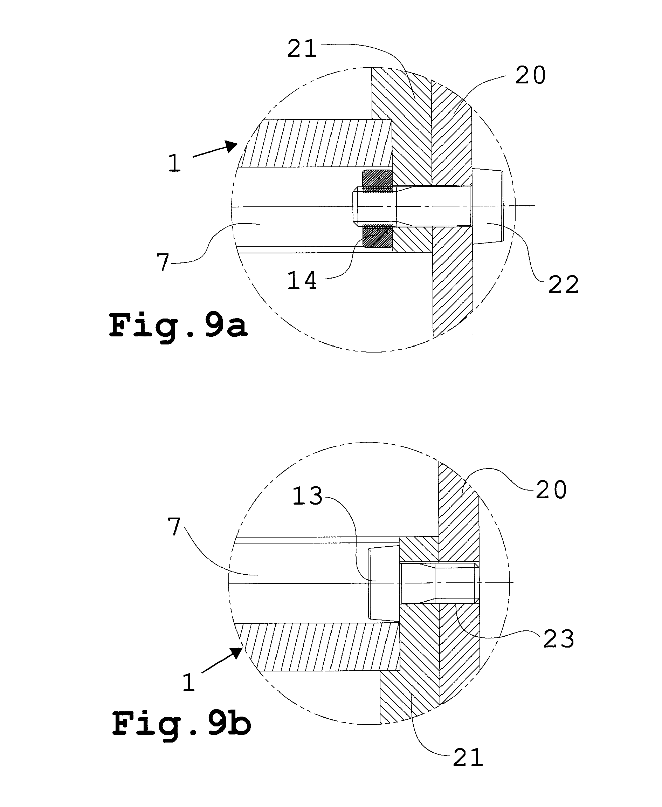

In Fig. 6 ist dargestellt, wie in die Ausnehmungen 7 beispielsweise eine Sechskantmutter 14 angeordnet ist und in der jeweiligen Ausnehmung 7 formschlüssig umfasst ist. Weiterhin ist dargestellt, wie eine Schraube 13 mit ihrem runden Schraubenkopf innerhalb einer erfindungsgemäßen Ausnehmung 7 aufgenommen ist. Im dargestellten Beispiel handelt es sich um eine Rundkopfschraube, es liegt ebenfalls im Rahmen der Erfindung, wenn eine Schraube verwendet wird, die einen Sechskantkopf als Befestigungsabschnitt aufweist. Wie beispielsweise in Fig. 7 dargestellt ist, kann in die Ausnehmungen 7 eines erfindungsgemäßen Gehäuses 1 auch jeweils ein Nutstein 15, wie er beispielsweise in Fig. 5 dargestellt ist, eingesetzt sein. Ein derartiger Nutstein 15 kann, wie in Fig. 5 dargestellt, eine in Längsrichtung seines quaderförmigen Körpers verlaufende Gewindebohrung 16 aufweisen und ebenfalls eine hierzu senkrecht verlaufende Gewindebohrung 17. Es liegt jedoch im Rahmen der Erfindung, auch einen Nutstein 15 zu verwenden, der nur eine längs verlaufende Gewindebohrung 16 oder nur eine quer verlaufende Gewindebohrung 17 aufweist. In Fig. 7 ist dargestellt, wie in derartige Nutsteine Schrauben 18 eingeschraubt werden können, und zwar durch die Wanddurchbrüche 8 hindurch, um beispielsweise ein erfindungsgemäßes Gehäuse 1 mit einem plattenförmigen Körper 19 zu verbinden. Mittels der in den erfindungsgemäßen Ausnehmungen 7 angeordneten Muttern 14 oder Schrauben 13 kann ein erfindungsgemäßes Gehäuse 1 beispielsweise stirnseitig mittels eines Gehäusedeckels 21 verschlossen werden, wie das beispielsweise in Fig. 8 gezeigt ist. Dabei kann, wie in Fig. 9a dargestellt ist, eine Befestigung über eine von außen eingeschraubte Schraube 22 erfolgen. Hierbei ist in der jeweiligen Ausnehmung 7 eine Mutter 14 eingeführt. Alternativ kann, wie in Fig. 9b dargestellt ist, eine Verschraubung mittels einer in die Ausnehmung 7 eingebrachten Schraube 13 vorgenommen werden, die dann in ein Befestigungselement 23 eingeschraubt wird. Wie in den Fig. 8, 9a und 9b dargestellt ist, kann dabei gleichzeitig nicht nur ein Gehäusedeckel 21 mit dem Gehäuse 1 verschraubt werden, sondern es kann gleichzeitig auch die Befestigung des Gehäuses 1 an einer Wand 20 oder dergleichen vorgenommen werden. Vorteilhafterweise ist hierbei eine form-, kraft- und/oder stoffschlüssige Verbindung zwischen dem Gehäuse 1 und dem jeweiligen Gehäusedeckel 21 vorhanden. In Fig. 8 ist ein beidseitiger Gehäusedeckel 21 vorgesehen, jedoch ist es ebenfalls möglich, das erfindungsgemäße Gehäuse 1 nur einseitig mit einem Gehäusedeckel 21 zu verschließen.

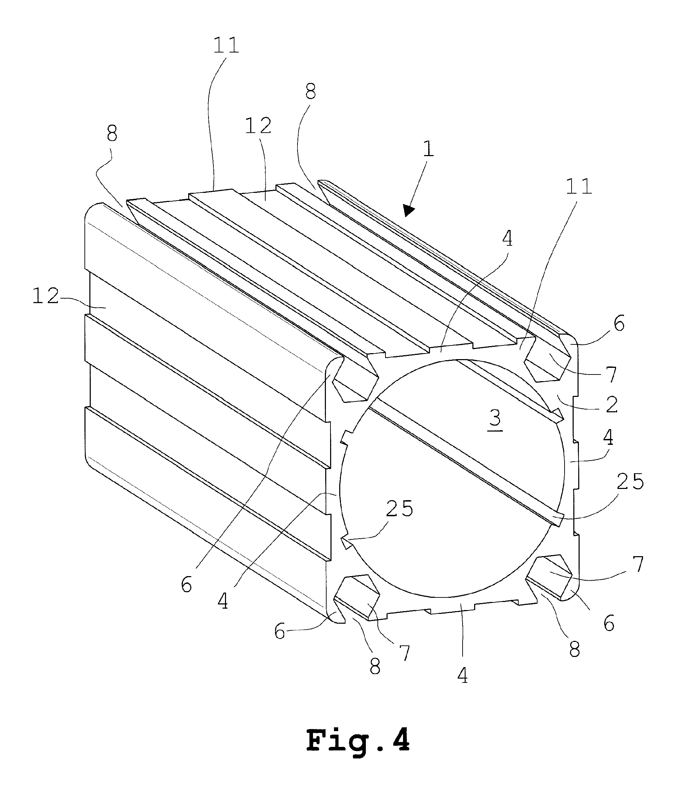

In Fig. 4 ist eine weitere Alternative dargestellt, wobei zusätzlich in der Wandung des hohlzylindrischen Innenraums 3 Längsnuten 25 vorgesehen sind, die beispielsweise als Führungskanäle für elektrische Kabel dienen.

Weiterhin ist in Fig. 7 dargestellt, dass es im Rahmen der Erfindung ebenfalls möglich ist, wenn in die erfindungsgemäßen Ausnehmungen 7 durch die Wanddurchbrüche 8 hindurch Einclipselemente 26 befestigt werden können. Hierbei handelt es sich um federnde Elemente, die sich durch ein Aufspreizen radial an das Profil der Ausnehmung 7 herandrücken. Derartige Einclipselemente 26 können in vielseitiger Weise Verwendung finden.

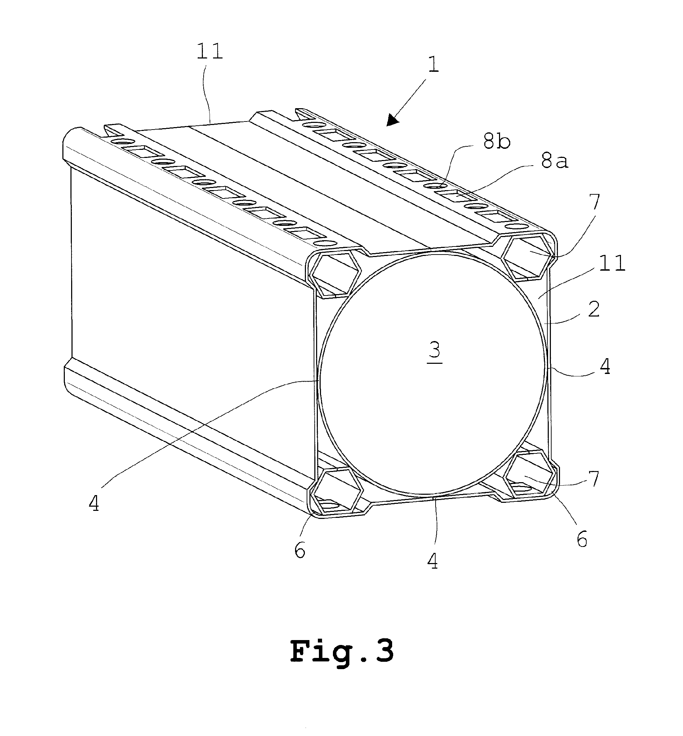

In Fig. 3 ist eine weitere Ausführungsform eines erfindungsgemäßen Gehäuses 1 dargestellt. Dieses Gehäuse 1 ist nicht als Strangpressprofil oder Spritzgussprofil ausgebildet, sondern als Blechformprofil, wobei die Umfangswandung 2 sowie die im Querschnitt polygonförmigen Ausnehmungen 7 aus einzelnen Blechformteilen gebildet werden, die beispielsweise miteinander verschweißt sind. Auch ist der Innenraum 3 durch ein separates Blechformteil hergestellt.

Die erfindungsgemäße Ausbildung insbesondere eines im Querschnitt kreisförmigen hohlzylindrischen Innenraums 3 passt sich in optimaler Weise an die runde Umrissform elektrischer Antriebssysteme an, bestehend aus einem Elektromotor und optional zusätzlich aus einer Kombination von Getriebe, Encoder und Elektroniken. Wie bereits beschrieben, kann ein erfindungsgemäßes Gehäuse 1 an seiner Vorder- und Rückseite mittels Gehäusedeckel verschlossen werden, so dass ein optimaler mechanischer Schutz und auch ein Schutz gegen Umwelteinflüsse bewirkt werden kann. Das erfindungsgemäße System mit den im Querschnitt polygonförmigen Ausnehmungen mit ihren Wanddurchbrüchen ermöglicht eine sehr hohe Montageflexibilität, wobei es möglich ist, das Gehäuse 1 mit einem darin enthaltenen Antriebssystem an einem anderen Element zu befestigen, und auch andere Komponenten an einem Gehäuse 1 selbst zu befestigen, so dass die verschiedensten Montagesituationen abgedeckt werden, und zwar immer unter Verwendung ein und desselben erfindungsgemäßen Gehäuses 1. Hierbei ist es insbesondere von Vorteil, dass die verwendeten Schrauben 13 oder Muttern 14 als Normteile ausgebildet sein können, da die Ausnehmungen 7 in ihrer Querschnittsform und den Abmessungen an die Normteile angepasst sein können.

Auf Grund der erfindungsgemäßen Ausgestaltung ist es zum Beispiel nicht erforderlich, in den Stirnendflächen des Gehäuses 1 separate Bohrungen einerseits für die Befestigung eines Gehäusedeckels und andererseits für die Befestigung des Gehäuses 1 an Tragkörpern oder dergleichen vorzusehen, siehe Fig. 9a und 9b. Dies ist ein Vorteil gegenüber den bekannten Systemen, bei denen die Ausnehmungen 7 z. B. als T-Nuten ausgestaltet sind. Gegenüber derartigen bekannten Systemen wird auch eine deutlich bessere Raumausnutzung in den Ecken des erfindungsgemäßen Gehäuses möglich, so dass eine reduzierte Außengeometrie bei gleich großer Ausbildung des Innenraums verwirklicht werden kann.

Die Erfindung bezieht sich auch auf ein Gehäuse 1, dessen Umfangswandung 2 den Innenraum 3 mit einem Winkel größer 180 ° und kleiner 360 ° umschließt, so dass das Gehäuse 1 seitlich geöffnet ist.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann.

### Bezugszeichenliste:

- 1: Gehäuse
- 2: Umfangswandung
- 3: hohlzylindrischer Innenraum
- 4: Seitenwände
- 6: Eckbereiche
- 7: Ausnehmung
- 8: Wanddurchbruch
- 8a: Einzeldurchbruch
- 8b: Einzeldurchbruch
- 9: Längsseite von 7
- 11: Stirnflächen von 1
- 12: Nuten
- 13: Schrauben
- 14: Muttern
- 15: Nutsteine
- 16: Längsbohrung
- 17: Querbohrung
- 18: Schraube
- 19: plattenförmiger Körper
- 20: Wand
- 21: Gehäusedeckel
- 22: Schraube
- 23: Befestigungselement
- 25: Längsnuten
- 26: Einclipselemente
- X-X: Längsachse
- Y-Y: Längsachse

## Patentansprüche

1. Gehäuse (1) zur Aufnahme von mindestens einem elektromotorischen Antriebsmodul für mechatronische Antriebssysteme, umfassend einen von einer Umfangswandung (2) umgebenen Innenraum (3), wobei insbesondere die Umfangswandung (2) eine Rechtseckform mit vier Seitenwänden (4) aufweist, und der Innenraum (3) einen in Bezug auf seine Längsachse (X-X) insbesondere kreisförmigen Querschnitt besitzt, wobei die Umfangswandung (2) in mindestens einer ihrer Eckbereiche (6) eine Ausnehmung (7) zur Aufnahme von Befestigungsmitteln (13, 14, 15) aufweist, wobei die Ausnehmung (7) parallel zur Längsachse (X-X) verläuft, und einen durch die Umfangswandung (2) hindurch sich erstreckenden Wanddurchbruch (8) umfasst,
**dadurch gekennzeichnet, dass** die Ausnehmung (7) einen in Bezug auf ihre Längsachse (Y-Y) polygonförmigen Querschnitt besitzt, wobei in einer Längsseite (9) der Ausnehmung (7), die parallel zu einer der Seitenwände (4) der Umfangswandung (2) verläuft und an diese angrenzt, der sich durch die Umfangswandung (2) hindurch bis zur Gehäuseaußenseite erstreckende Wanddurchbruch (8) ausgebildet ist.

2. Gehäuse (1) nach Anspruch 1,
**dadurch gekennzeichnet, dass** der polygonförmige Querschnitt die Form eines gleichseitigen Sechsecks besitzt.

3. Gehäuse (1) nach Anspruch 1 oder 2,
**dadurch gekennzeichnet, dass** die Ausnehmung (7) an einer oder beiden Stirnendflächen (11) des Gehäuses (1) eine Öffnung aufweist.

4. Gehäuse (1) nach einem der Ansprüche 1 bis 3,
**dadurch gekennzeichnet, dass** der Wanddurchbruch (8) als Schlitz ausgebildet ist und sich über die gesamte Länge des Gehäuses (1) erstreckt.

5. Gehäuse (1) nach einem der Ansprüche 1 bis 4,
**dadurch gekennzeichnet, dass** der Wanddurchbruch (8) über einen Teilbereich der Längserstreckung der Ausnehmung (7) ausgebildet ist.

6. Gehäuse (1) nach Anspruch 5,
**dadurch gekennzeichnet, dass** der Wanddurchbruch (8) kreisförmig oder rechteckig ausgebildet ist.

7. Gehäuse (1) nach einem der Ansprüche 1 bis 5,
**dadurch gekennzeichnet, dass** zwei Ausnehmungen (7) in nebeneinanderliegenden Eckbereichen (6) der Umfangswandung (2) ausgebildet sind, wobei ihre Wanddurchbrüche (8) auf derselben Seitenwand (4) vorhanden sind.

8. Gehäuse (1) nach Anspruch 7,
**dadurch gekennzeichnet, dass** in jedem Eckbereich (6) Ausnehmungen (7) ausgebildet sind, wobei deren Wanddurchbrüche (8) an zwei einander gegenüberliegenden Seitenwänden (4) angeordnet sind.

9. Gehäuse (1) nach einem der Ansprüche 1 bis 8,
**dadurch gekennzeichnet, dass** in mindestens einer Seitenwand (4) der Gehäusewandung (2) eine oder mehrere schwalbenschwanzförmige Nuten (12) parallel zu den Ausnehmungen (7) und/oder rillenförmigen Nuten (12) verlaufen.

10. Gehäuse (1) nach einem der Ansprüche 1 bis 9,
**dadurch gekennzeichnet, dass** in den Ausnehmungen (7) Nutsteine (15) umfangsgemäß formschlüssig aufnehmbar sind, mit in ihnen ausgebildeten Längs- und/oder Querbohrungen (16, 17).

11. Gehäuse (1) nach einem der Ansprüche 1 bis 10,
**dadurch gekennzeichnet dass** der Querschnitt der polygonförmigen Ausnehmung (7) in Form und Größe der Kopfform von Norm-Schrauben (13) und/oder der Form von Norm-Muttern (14) angepasst ist.

12. Gehäuse (1) nach einem der Ansprüche 1 bis 11,
**dadurch gekennzeichnet, dass** das Gehäuse (1) ein- oder beidseitig mit jeweils einem Gehäusedeckel (21) verschließbar ist.

13. Gehäuse (1) nach einem der Ansprüche 1 bis 12,
**dadurch gekennzeichnet, dass** das Gehäuse (1) als Strangpressprofil oder als Spritzgussteil ausgebildet ist.

14. Gehäuse (1) nach einem der Ansprüche 1 bis 12,
**dadurch gekennzeichnet, dass** das Gehäuse (1) als Blech-Biegeteil ausgebildet ist, wobei die Gehäusewandung (2), die Ausnehmungen (7) und der hohlzylindrische Innenraum (3) jeweils von unterschiedlichen Blechformteilen gebildet sind, die miteinander über eine Formschluss- und/oder Materialschlussverbindung verbunden sind.

15. Gehäuse (1) nach einem der Ansprüche 1 bis 14,
**dadurch gekennzeichnet dass** in der Umfangswandung (2) des hohlzylindrischen Innenraums (3) mindestens eine Längsnut (25) ausgebildet ist.

16. Gehäuse (1) nach einem der Ansprüche 1 bis 15,
**dadurch gekennzeichnet dass** die Umfangswandung (2) den Innenraum (3) teilweise mit einem Umfangswinkel größer 180 ° umschließt.
